# EUROPEAN PATENT APPLICATION

(11) **EP 3 872 704 A2**
(43) Date of publication of application: **01.09.2021**
(21) Application number: 21179317.9
(22) Date of filing: 14.06.2021
(51) Int. Cl.: G06K 9/32, G06K 9/46, G06K 9/62

(54) **HEADER MODEL FOR INSTANCE SEGMENTATION, INSTANCE SEGMENTATION MODEL, IMAGE SEGMENTATION METHOD AND APPARATUS**

(30) Priority: 30.11.2020 CN 202011373087
(71) Applicant: Beijing Baidu Netcom Science and Technology Co., Ltd., Beijing 100085 (CN)
(72) Inventor: WANG, Xiaodi, Beijing, 100085 (CN); HAN, Shumin, Beijing, 100085 (CN); FENG, Yuan, Beijing, 100085 (CN); XIN, Ying, Beijing, 100085 (CN); ZHANG, Bin, Beijing, 100085 (CN); LIN, Shufei, Beijing, 100085 (CN); YUAN, Pengcheng, Beijing, 100085 (CN); LONG, Xiang, Beijing, 100085 (CN); PENG, Yan, Beijing, 100085 (CN); ZHENG, Honghui, Beijing, 100085 (CN)
(74) Representative: Studio Torta S.p.A.

(57) **Abstract**

This application discloses a header model for instance segmentation, an instance segmentation model, an image segmentation method and apparatus, and relates to the field of artificial intelligence technologies such as computer vision and deep learning technologies. The header model includes: a target box branch, including a first branch and a second branch, where the first branch is configured to process an inputted first feature map to obtain class information and confidence of a target box, and the second branch is configured to process the first feature map to obtain location information of the target box; a mask branch, configured to process an inputted second feature map to obtain mask information; the second feature map is a feature map outputted by an ROI extraction module, and the first feature map is a feature map resulting from a pooling performed on the second feature map. The application makes the segmentation information and confidence predicted by the header more accurate, resulting in a finer segmentation result of the instance segmentation.

## Description

### TECHNICAL FIELD

The present application relates to the field of artificial intelligence technologies, specifically, computer vision and deep learning technologies, in particular to a header model for instance segmentation, an instance segmentation model, an image segmentation method and apparatus.

### BACKGROUND

With the development of deep learning, computer vision technologies witness more and more applications. Among the computer vision technologies, the instance segmentation, as a relatively basic task of vision tasks, is mainly used for the pixel-level segmentation of target objects in an image and the identification of their classes.

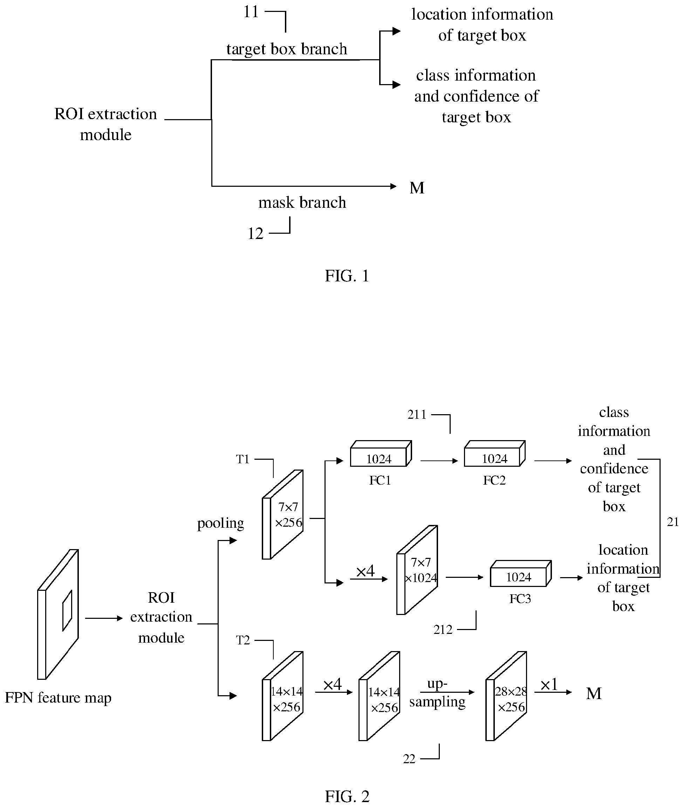

A commonly used model structure for the instance segmentation task mainly includes: a backbone, a neck, a header and a loss. The header is used to predict the location and segmentation information of a target. Conventionally, the header generally adopts a structure as shown in Fig.1. However, the segmentation information and confidence predicted by the header of this structure are not sufficiently accurate, resulting in a relatively coarse segmentation result of the instance segmentation.

### SUMMARY

This application provides a header model for instance segmentation, an instance segmentation model, an image segmentation method and apparatus.

According to a first aspect, this application provides a header model for instance segmentation, including a target box branch and a mask branch, wherein
the target box branch includes a first branch and a second branch, the first branch is configured to process an inputted first feature map to obtain class information and confidence of a target box, and the second branch is configured to process the first feature map to obtain location information of the target box;
the mask branch is configured to process an inputted second feature map to obtain mask information;
wherein the second feature map is a feature map outputted by a region of interest (ROI) extraction module, and the first feature map is a feature map
resulting from a pooling performed on the second feature map.

According to a second aspect, this application provides another header model for instance segmentation, including a target box branch, a mask branch and a mask confidence recalculation branch, wherein
the target box branch is configured to process an inputted first feature map to obtain class information and confidence of a target box as well as location information of the target box;
the mask branch is configured to process an inputted second feature map to obtain a third feature map;
the mask confidence recalculation branch is configured to process the second feature map and a fourth feature map to obtain a confidence of the mask branch,
wherein the second feature map is a feature map outputted by an ROI extraction module, the first feature map is a feature map resulting from a pooling performed on the second feature map, and the fourth feature map is a feature map resulting from a down-sampling operation performed on
the third feature map.

According to a third aspect, this application provides an instance segmentation model, including a backbone, a neck, a header and a loss that are sequentially connected, wherein an ROI extraction module is further provided between the neck and the header, and the header adopts the header model according to the first aspect or the second aspect. According to a fourth aspect, this application provides an image segmentation method having the instance segmentation model according to the third aspect, wherein the method includes: performing instance segmentation on an image by using the instance segmentation model.

According to a fifth aspect, this application provides an image segmentation apparatus having the instance segmentation model according to the third aspect, wherein the image segmentation apparatus is configured to perform instance segmentation on an image by using the instance segmentation model.

According to a sixth aspect, this application provides an electronic device, including:
at least one processor; and
a memory in communicative connection with the at least one processor, wherein the memory stores therein an instruction executable by the at least one processor, and when the instruction is executed by the at least one processor, the at least one processor is caused to implement any method
according to the fourth aspect.

According to a seventh aspect, this application provides a non-transitory computer readable storage medium storing a computer instruction, wherein the computer instruction is configured to cause a computer to implement any method according to the fourth aspect.

With improvements, according to the techniques of this application, on the model structure of the header in the instance segmentation model, the segmentation information and confidence predicted by the header are more accurate, resulting in a finer segmentation result of the instance segmentation.

It is understood, the description provided in this section is not intended to identify critical or important features of embodiments of this application, nor to limit the scope of this application. Other features of this application will be easily understood with reference to the following description.

### BRIEF DESCRIPTION OF THE DRAWINGS

The accompany drawings are solely for the purpose of explanation of the present application and in no way limit the application.
Fig.1 is a schematic diagram of a model structure of a conventional header;
Fig.2 is a schematic diagram of an overall structure of a header model according to a first embodiment of this application;
Fig.3 is a schematic structural diagram of a target box branch according to the first embodiment of this application;
Fig.4 is a schematic structural diagram of a mask confidence recalculation branch according to the first embodiment of this application; and
Fig.5 is a block diagram of an electronic device configured to implement an image segmentation method according to an embodiment of this application.

### DETAILED DESCRIPTION

The exemplary embodiments of the present application are described hereinafter with reference to accompany drawings. The details of embodiments of the present application provided in the description are provided to facilitate understanding and are only intended to be exemplary. Those of ordinary skill in the art will appreciate that modifications or replacements may be made in the described embodiments without departing from the scope and spirit of the present application. Further, for clarity and conciseness, descriptions of known functions and structures are omitted.

This application provides a header model for instance segmentation and an instance segmentation model, and aims to improve the model structure of the header in the instance segmentation model, so as to solve the technical problem that the segmentation information and confidence (also called score) predicted by the conventional header are not sufficiently accurate, resulting in a relatively coarse segmentation result of the instance segmentation. Prior to an explanation of this application, a brief introduction of the model structure of the conventional header is given below.

As shown in Fig.1, the conventional header includes a target box branch 11 and a mask branch 12. The target box branch is responsible for outputting class information and confidence of a target box (i.e., target detection box) as well as location information of the target box. However, the task regarding the location information differs substantially from the task regarding the confidence, and the confidence generated by regression in the target box branch suffers from a poor precision. The mask branch is responsible for outputting segmentation information of the target (labelled as M in Fig.1). The mask branch does not output the confidence independently, instead, it directly uses the confidence obtained in the target box branch. As a result, the confidence of the mask branch is not accurate enough.

It can be seen that, the conventional header suffers from a poor characterization capability, which makes the segmentation information and confidence generated by regression not sufficiently accurate, resulting in a relatively coarse segmentation result of the instance segmentation.

In view of this, this application provides a header model for instance segmentation and an instance segmentation model, to make the predicted segmentation information and confidence more accurate, resulting in a finer segmentation result of the instance segmentation.

Exemplary embodiments of this application are described hereinafter.

### First embodiment

The embodiment of this application provides a header model for instance segmentation. As shown in Fig.2, the header model includes a target box branch 21 and a mask branch 22,
the target box branch 21 includes a first branch 211 and a second branch 212, the first branch 211 is used to process an inputted first feature map T1 to obtain class information and confidence of a target box, and the second branch 212 is used to process the first feature map T1 to obtain location information of the target box;
the mask branch 22 is used to process an inputted second feature map T2 to obtain mask information (M);
the second feature map T2 is a feature map outputted by an ROI extraction module, and the first feature map T1 is a feature map resulting from a
pooling performed on the second feature map T2.

The location information in this application may be coordinate information, and the confidence in this application may be a score.

The header model in the embodiment of this application may be applied to a header in an instance segmentation model. In other words, the header in an instance segmentation model may adopt the header model in the embodiment of this application.

In terms of the overall structure of the instance segmentation model, the instance segmentation model includes a backbone, a neck, a header and a loss that are sequentially connected, and an ROI extraction module is provided between the neck and the header. The backbone includes mainly several convolution layers, so as to perform layer-by-layer convolutional calculation on the inputted image to obtain the feature map of the inputted image. The neck is nested in the backbone, and is mainly used to allocate targets of different sizes, i.e., allocate targets of different sizes to feature maps with respective dimensions. The neck may process the feature map of the inputted image by using feature pyramid networks for object detection (FPN), to obtain an FPN feature map. A feature map as a result of the processing performed on the FPN feature map by the ROI extraction module may act as the input to the header, so as to realize the prediction of the location and segmentation of the target, to obtain target detection and segmentation information. The loss is mainly used to calculate the different between the prediction result of the header and true labels.

More specifically, the mask branch 22 of the header may be directly connected to the ROI extraction module, that is, the output of the ROI extraction module (i.e., the forgoing second feature map T2) may act as the input to the mask branch 22. The target box branch 21 of the header may be connected to the ROI extraction module through a pooling layer. Thus, the input of the target box branch 21 is an output (i.e., the foregoing first feature map T1) of the pooling layer which is the result of the pooling performed on the output of the ROI extraction module.

For example, the second feature map T2 has a dimension of 14×14×256, and the first feature map T1 has a dimension of 7×7×256.

In the embodiment of this application, the mask branch 22 may be a mask branch of the conventional header model. For example, as shown in Fig.2, the input of the mask branch 22 is a feature map with a dimension of 14×14×256. After subjecting the feature map to four convolution layers, a feature map of 14×14×256 may be obtained. Next, an upper-sampling operation is performed on the feature map to obtain a feature map of 28×28×256. Finally, the feature map of 28×28×256 is subjected to a convolution layer to obtain M. For example, M may be a feature map with a dimension of 28×28×c, wherein c denotes a total number of classes.

In the embodiment of this application, the target box branch 21 outputs the class information and confidence of the target box and the location information of the target box separately through different branches, which improves the precision of the confidence generated by the target box branch 21, compared with the conventional solution in which the class information and confidence of the target box and the location information of the target box are outputted through the same branch.

Optionally, as shown in Fig.2, the first branch 211 includes a first full connection layer FC1 and a second full connection layer FC2, and the first feature map T1 goes through the first full connection layer FC1 and the second full connection layer FC2 sequentially, such that the class information and the confidence of the target box is obtained.

For example, both the first full connection layer FC1 and the second full connection layer FC2 may have a dimension of 1024.

Optionally, as shown in Fig.2, the second branch 212 includes N convolution layers and a third full connection layer FC3, and the first feature map T1 goes through the N convolution layers and the third full connection layer FC3 sequentially, such that the location information of the target box is obtained, wherein N is a positive integer.

For example, N may be 4. That is, the second branch 212 may include 4 convolution layers. N may be other positive integer, such as 5 or 6. The dimension of the third full connection layer FC3 may be 1024.

For example, after subjecting the first feature map T1 with a dimension of 7×7×256 to 4 convolution layers, a feature map with a dimension of 7×7×1024 may be obtained.

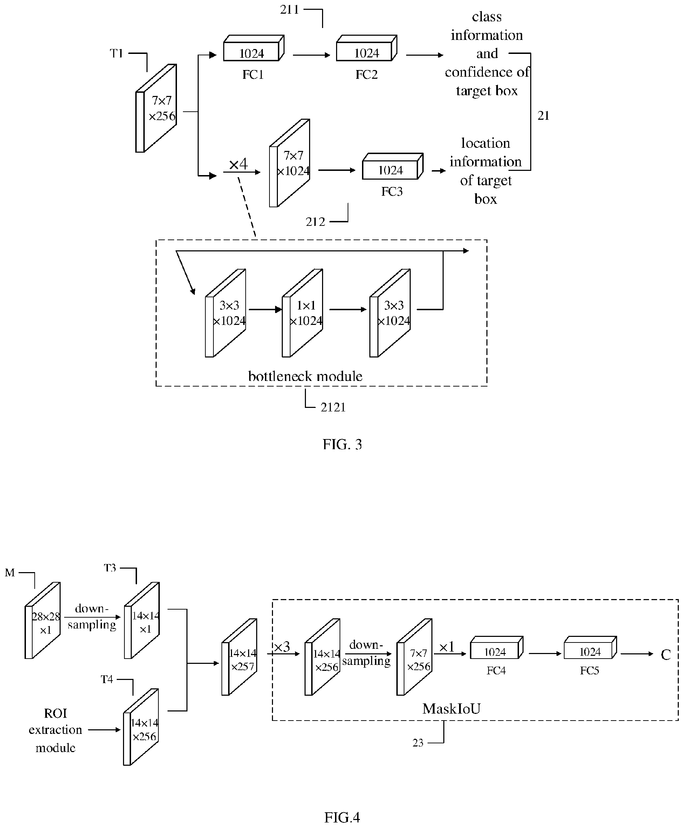

Optionally, as shown in Fig.3, at least one of the N convolution layers is replaced with a bottleneck module 2121 including a short-circuit branch and a convolution layer branch, and an output of the bottleneck module is a sum of an output of the short-circuit branch and an output of the convolution layer branch.

The bottleneck module may adopt a residual structure, which is composed of two sub-branches, i.e., the short-circuit branch and the convolution layer branch. The short-circuit branch directly connects the input end to the output end. The convolution layer branch may include several convolution layers. A sum of the outputs of these two branches is the output of the bottleneck module.

Replacing the convolution layer with the bottleneck module may further improve the precision of the second branch, thereby making the location information of the target box more accurate. In replacing the convolution layer with the bottleneck module, all the N convolution layers may be replaced, or only some of the convolution layers are replaced. In order to balance the speed and precision of the network, the first one of the N convolution layers may be replaced with the bottleneck module.

Optionally, as shown in Fig.3, the convolution layer branch includes a 3×3×1024 convolution layer, a 1×1×1024 convolution layer and a 3×3×1024 convolution layer.

Optionally, as shown in Fig.4, the header model further includes a mask confidence recalculation branch 23 (labelled as MaskIoU in Fig.4) used to process inputted third feature map T3 and fourth feature map T4 to obtain a confidence of the mask branch (labelled as C in Fig.4), wherein the third feature map T3 is a feature map resulting from a down-sampling operation performed on a feature map M (i.e., mask information) outputted by the mask branch, and the fourth feature map T4 is a feature map outputted by the ROI extraction module.

The input of the mask confidence recalculation branch 23 may be understood as a sum of the third feature map T3 and the fourth feature map T4.

For example, the feature map M outputted by the mask branch may have a dimension of 28×28×1, after a down-sampling is performed on the feature map, a feature map of 14×14×1, that is, the third feature map T3, may be obtained. The fourth feature map T4 may have a dimension of 14×14×256; here, the fourth feature map T4 may also be understood as the second feature map T2 in Fig.3. The input of the mask confidence recalculation branch 23 is a feature map with a dimension of 14×14×257.

The connection relationship may be understood as follows: the mask confidence recalculation branch 23 is connected to the mask branch and the ROI extraction module respectively, and a sampling layer (or down-sampling operator) may be provided between the mask branch and the mask confidence recalculation branch.

Optionally, as shown in Fig.4, the mask confidence recalculation branch includes P convolution layers, a sampling layer, a fourth full connection layer FC4 and a fifth full connection layer FC5, P is a positive integer.

For example, P may be 3. That is, the mask confidence recalculation branch 23 may include three convolution layers, one sampling layer, and two full connection layers.

For example, the input of the mask confidence recalculation branch 23 is a feature map with a dimension of 14×14×257. After the feature map goes through the three convolution layers, a feature map of 14×14×256 is obtained. After the down-sampling operation in the sampling layer (or down-sampling operator) is performed, a feature map of 7×7×256 is obtained. Then after the feature map of 7×7×256 goes through two full connection layers with a dimension of 1024, a score is finally obtained, which is used as the confidence of the mask branch.

In the embodiment of this application, the mask confidence recalculation branch is added in the header, and the mask confidence recalculation branch may acquire a more accurate score based on the feature map outputted by the mask branch and use the score as the confidence of the mask branch, which improves the precision of the confidence of the mask branch, compared with the conventional solution in which the confidence obtained in the target box branch is directly used as the confidence of the mask branch.

It is noted, the multiple optional implementations of the header model for instance segmentation in this application may be implemented in a combined manner, or implemented separately, which is not limited in this application.

The foregoing embodiment of this application at least has the following advantage or beneficial effect.

In the embodiment of this application, with improvements on the model structure of the header in the instance segmentation model, the segmentation information and confidence predicted by the header are more accurate, resulting in a finer segmentation result of the instance segmentation.

### Second embodiment

This application further provides another header model for instance segmentation, including a target box branch, a mask branch and a mask confidence recalculation branch, wherein
the target box branch is used to process an inputted first feature map to obtain class information and confidence of a target box as well as location information of the target box;
the mask branch is used to process an inputted second feature map to obtain a third feature map;
the mask confidence recalculation branch is used to process the second feature map and a fourth feature map to obtain a confidence of the mask branch,
wherein the second feature map is a feature map outputted by an ROI extraction module, the first feature map is a feature map resulting from a pooling performed on the second feature map, and the fourth feature map is a feature map resulting from a down-sampling operation performed on
the third feature map.

In the embodiment of this application, the mask confidence recalculation branch may be added on the basis of a conventional header model, while the target box branch and the mask branch of the conventional header model remain.

For relevant technical solutions of the embodiment of this application, references may be made to the relevant description in the first embodiment and Fig.2 to Fig.4, and the same beneficial effects may be achieved by the relevant technical solutions. To avoid redundancy, a detailed description is omitted herein.

In the embodiment of this application, the mask confidence recalculation branch is added in the header, and the mask confidence recalculation branch may acquire a more accurate score based on the feature map outputted by the mask branch and use the score as the confidence of the mask branch, which improves the precision of the confidence of the mask branch, compared with the conventional solution in which the confidence obtained in the target box branch is directly used as the confidence of the mask branch.

### Third embodiment

This application further provides an instance segmentation model, including a backbone, a neck, a header and a loss that are sequentially connected, wherein an ROI extraction module is further provided between the neck and the header, and the header adopts the header model of the first embodiment or the header model of the second embodiment. The backbone is used to perform convolutional calculation on the inputted image to obtain the first feature map of the image. The neck is used to process the first feature map to obtain the second feature map. The ROI extraction module is used to extract ROI from the second feature map, to obtain the third feature map as the input to header.

For relevant technical solutions of the embodiment of this application, references may be made to the relevant description in the first and second embodiments and Fig.2 to Fig.4. To avoid redundancy, a detailed description is omitted herein.

The instance segmentation model provided in this application may implement each process of the foregoing embodiments of the header model for instance segmentation, and may achieve the same beneficial effects. To avoid redundancy, a detailed description is omitted herein.

This application further provides an image segmentation method having the instance segmentation model provided in this application. The method includes: performing instance segmentation on an image by using the instance segmentation model.

For a specific process of using the instance segmentation model to perform instance segmentation on an image in the embodiment of this application, reference may be made to the foregoing relevant description, and the same beneficial effects may be achieved. To avoid redundancy, a detailed description is omitted herein.

This application further provides an image segmentation apparatus having the instance segmentation model provided in this application. The image segmentation apparatus is configured to perform instance segmentation on an image by using the instance segmentation model.

For a specific process of using the instance segmentation model to perform instance segmentation on an image in the embodiment of this application, reference may be made to the foregoing relevant description, and the same beneficial effects may be achieved. To avoid redundancy, a detailed description is omitted herein.

According to embodiments of this application, this application further provides an electronic device and a readable storage medium.

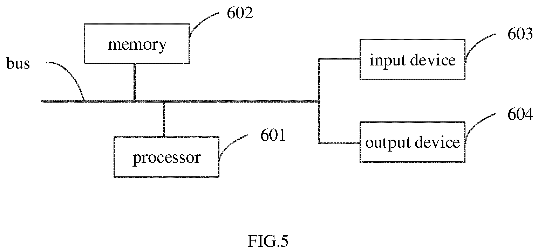

Referring to Fig.5, a block diagram of an electronic device configured to implement the image segmentation method according to embodiments of this application is illustrated. The electronic device is intended to represent various forms of digital computers, such as laptop computer, desktop computer, workstation, personal digital assistant, server, blade server, mainframe and other suitable computers. The electronic device may represent various forms of mobile devices as well, such as personal digital processing device, cellular phone, smart phone, wearable device and other similar computing devices. The components, the connections and relationships therebetween and the functions thereof described herein are merely exemplarily, and are not intended to limit the implementation of this application described and/or claimed herein.

As shown in Fig.5, the electronic device includes: one or more processors 601, a memory 602, and an interface including a high speed interface and a low speed interface, which is used for connecting various parts. The various parts are interconnected by different buses, and may be installed on a common motherboard or installed in another manner as required. The processor may process instructions configured to be executed in the electronic device, and the instructions include those stored in the memory and used for displaying graphic information of GUI on an external input/output device (e.g., a display device coupled to the interface). In other implementations, if needed, multiple processors and/or multiple buses may be used together with multiple memories. Similarly, multiple electronic devices may connected, wherein each electronic device performs a part of necessary operations (e.g., in a server array, a group of blade servers, or a multi-processor system).

Fig.5 illustrates a single processor 601 as an example.

The memory 602 is the non-transitory computer readable storage medium according to the present application. The memory stores instructions configured to be executed by at least one processor, so that the at least one processor implements the image segmentation method according to the present application. The non-transitory computer readable storage medium according to the present application stores computer instructions configured to be executed by a computer to implement the image segmentation method according to the present application.

As a non-transitory computer readable storage medium, the memory 602 may be used to store non-transitory software program, non-transitory computer executable program and module, such as the program instruction/module corresponding to the image segmentation method according to some embodiments of the present disclosure. The processor 601 is configured to perform various functional applications and data processing of the image segmentation apparatus, that is, to implement the image segmentation method according to the foregoing method embodiments, by running non-transitory software program, instruction and module stored in the memory 602.

The memory 602 may include a program storage zone and a data storage zone. The program storage zone may store an operating system, and an application program required for at least one function. The data storage zone may store data and the like created according to the usage of the electronic device for implementing the image segmentation method. Further, the memory 602 may include a high speed random access memory, or a non-transitory storage, e.g., at least one magnetic disk storage device, a flash memory device, or other non-transitory solid-state storage device. In some embodiments, the memory 602 optionally includes a memory located remote to the processor 601. The memory may be connected to the electronic device for implementing the image segmentation method via a network. For example, the network includes, but is not limited to: Internet, intranet, local area network (LAN), mobile communication network or a combination thereof.

The electronic device for implementing the image segmentation method may further include: an input device 603 and an output device 604. The processor 601, the memory 602, the input device 603 and the output device 604 may be connected by a bus or in other manner. In Fig.5, a connection by bus is illustrated as an example.

The input device 603 may receive inputted numeric or character information, and generate key signal inputs related to the user settings and functional control of the electronic device for implementing the image segmentation method. The input device 603 may be, for example, a touch screen, keypad, mouse, trackpad, touchpad, indication rod, one or more mouse buttons, trackball, joystick, or the like. The output device 604 may include a display device, auxiliary lighting device (e.g., an LED), tactile feedback device (e.g., a vibration motor) and the like. The display device may include, but is not limited to, a liquid crystal display (LCD), light-emitting diode (LED) display and plasma display. In some implementations, the display device may be a touch screen.

The various implementations of the system and technique described herein may be implemented in a digital electronic circuit system, integrated circuit system, application specific integrated circuit (ASIC), computer hardware, firmware, software and/or a combination thereof. The implementations may include: the system and technique are implemented in one or more computer programs configured to be executed and/or interpreted by a programmable system including at least one programmable processor. The programmable processor may be a special purpose or general purpose programmable processor, and may receive data and instructions from a storage system, at least one input device and at least one output device, and transmit data and instructions to the storage system, the at least one input device and the at least one output device.

The computer program (also known as program, software, software application, or code) includes machine instructions for programmable processor, and may be implemented by using advanced procedural and/or object-oriented programming languages and/or assembly/machine languages. As used herein, the terms "machine readable medium" and "computer readable medium" refer to any computer program product, device and/or apparatus (e.g., a magnetic disk, optic disc, memory, programmable logic device (PLD)) configured to provide machine instructions and/or data to a programmable processor, and include a machine readable medium receiving machine instructions in the form of machine readable signals. The term "machine readable signal" refers to any signal used to provide machine instructions and/or data to a programmable processor.

To provide for interactions with users, the system and technique described herein may be implemented in the computer. The computer is provided with a display device (e.g., a cathode ray tube (CRT) or liquid crystal display (LCD) display) for displaying information to users, and a keyboard and pointing device (e.g., a mouse or trackball). A user may provide input to the computer through the keyboard and the pointing device. Other types of devices may be provided for the interactions with users, for example, the feedbacks provided to users may be any form of sensory feedbacks (e.g., visual feedback, auditory feedback, or tactile feedback); and the user input may be received in any form (including sound input, voice input or tactile input).

The system and technique described herein may be implemented in a computing system including a background component (e.g., a data server), a computing system including a middleware component (e.g., an application server), a computing system including a front-end component (e.g., a user computer provided with a GUI or web browser by which users may interact with the implementation of the system and technique described herein), or a computing system including any combination of such background component, middleware component or front-end component. The components of the system may be interconnected by digital data communication in any form or medium (e.g., communication network). The communication network includes for example: LAN, wide area network (WAN), Internet and a blockchain network.

The computer system may include a client and a server. Generally, the client and the server are far from each other and interact with each other through a communication network. The client-server relationship is generated by computer programs running on respective computers and having a client-server relation therebetween. The server may be a cloud server, which is also called cloud computing server or cloud mainframe. The cloud server is a mainframe product in the cloud computing service system, and is designed to solve the deficiencies in the conventional physical mainframe and virtual private server (VPS) services, such as significant difficulty in management, and poor service scalability.

It is understood, various forms of processes as shown above may be used, and steps thereof may rearranged, added or deleted. For example, as long as a desired outcome of the technical solutions disclosed in the present application is achieved, the steps set forth in the present application may be performed in parallel, sequentially, or in a different order, which is not limited herein.

The above specific implementations do not constitute a limitation on the scope of the present application. It is appreciated by those skilled in the art, various modifications, combinations, sub-combinations and replacements may be made according to design requirements or other considerations. Any modification, equivalent replacement and improvement made without departing from the spirit and principle of the present application shall be deemed as falling within the scope of the present application.

## Claims

1. A header model for instance segmentation, comprising a target box branch and a mask branch, wherein
the target box branch comprises a first branch and a second branch, the first branch is configured to process an inputted first feature map to obtain class information and confidence of a target box, and the second branch is configured to process the first feature map to obtain location information of the target box;
the mask branch is configured to process an inputted second feature map to obtain mask information;
wherein the second feature map is a feature map outputted by a region of interest (ROI) extraction module, and the first feature map is a feature map resulting from a pooling performed on the second feature map.

2. The header model according to claim 1, wherein the first branch comprises a first full connection layer and a second full connection layer, and the first feature map goes through the first full connection layer and the second full connection layer sequentially, such that the class information and the confidence of the target box is obtained.

3. The header model according to claim 1, wherein the second branch comprises N convolution layers and a third full connection layer, and the first feature map goes through the N convolution layers and the third full connection layer sequentially, such that the location information of the target box is obtained, wherein N is a positive integer.

4. The header model according to claim 3, wherein at least one of the N convolution layers is replaced with a bottleneck module; the bottleneck module comprises a short-circuit branch and a convolution layer branch, and an output of the bottleneck module is a sum of an output of the short-circuit branch and an output of the convolution layer branch.

5. The header model according to claim 4, wherein the convolution layer branch comprises a 3×3×1024 convolution layer, a 1×1×1024 convolution layer and a 3×3×1024 convolution layer.

6. The header model according to claim 1, further comprising a mask confidence recalculation branch configured to process inputted third and fourth feature maps to obtain a confidence of the mask branch, wherein the third feature map is a feature map resulting from a down-sampling operation performed on a feature map outputted by the mask branch, and the fourth feature map is a feature map outputted by the ROI extraction module.

7. The header model according to claim 6, wherein the mask confidence recalculation branch comprises P convolution layers, a sampling layer, a fourth full connection layer and a fifth full connection layer, P is a positive integer.

8. The header model according to claim 1, wherein the first feature map has a dimension of 7×7×256, and the second feature map has a dimension of 14×14×256.

9. A header model for instance segmentation, comprising a target box branch, a mask branch and a mask confidence recalculation branch, wherein
the target box branch is configured to process an inputted first feature map to obtain class information and confidence of a target box as well as location information of the target box;
the mask branch is configured to process an inputted second feature map to obtain a third feature map;
the mask confidence recalculation branch is configured to process the second feature map and a fourth feature map to obtain a confidence of the mask branch,
wherein the second feature map is a feature map outputted by an ROI extraction module, the first feature map is a feature map resulting from a pooling performed on the second feature map, and the fourth feature map is a feature map resulting from a down-sampling operation performed on the third feature map.

10. An instance segmentation model, comprising a backbone, a neck, a header and a loss that are sequentially connected,
wherein an ROI extraction module is further provided between the neck and the header, and the header adopts the header model according to any one of claims 1 to 9.

11. An image segmentation method having the instance segmentation model according to claim 10, comprising:
performing instance segmentation on an image by using the instance segmentation model.

12. An image segmentation apparatus having the instance segmentation model according to claim 10, wherein
the image segmentation apparatus is configured to perform instance segmentation on an image by using the instance segmentation model.

13. An electronic device, comprising:
at least one processor; and
a memory in communicative connection with the at least one processor,
wherein the memory stores therein an instruction executable by the at least one processor, and when the instruction is executed by the at least one processor, the at least one processor is caused to implement the method according to claim 11.

14. A non-transitory computer readable storage medium storing a computer instruction, wherein the computer instruction is configured to cause a computer to implement the method according to claim 11.
